(19) Europäisches Patentamt

European Patent Office

Office européen des brevets

(11) **EP 1 688 830 A1**

(12) **EUROPEAN PATENT APPLICATION**

(43) Date of publication:
**09.08.2006 Bulletin 2006/32**

(51) Int Cl.:
*G06F 3/033* (2006.01)   *G06F 1/16* (2006.01)
*G06F 3/02* (2006.01)

(21) Application number: **05250708.4**

(22) Date of filing: **08.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Research In Motion Limited**
**Waterloo, Ontario N2L 3W8 (CA)**

(72) Inventors:
• **Bersenev, Alexander L.**
**Kitchener, Ontario N2B 3V9 (CA)**
• **Griffin, Jason T.**
**Kitchener, Ontario N2P 2L3 (CA)**
• **Skarine, Alexei**
**Waterloo, Ontario N2T 2T3 (CA)**

(74) Representative: **Roberts, Gwilym Vaughan et al**
**Kilburn & Strode**
**20 Red Lion Street**
**London WC1R 4PJ (GB)**

Remarks:
Amended claims in accordance with Rule 86 (2) EPC.

(54) **Handheld electronic device having keyboard that provides two-dimensional navigation, and associated method**

(57)   A method for enabling navigation on a display (12) of a handheld electronic device (4). The display (12) has an X-Y coordinate system for identifying particular locations thereon. In addition, the handheld electronic device (4) has a keyboard (24) having a first plurality of keys (26), each of which has an assigned first X coordinate and an assigned first Y coordinate. The method includes determining a second X coordinate and a second Y coordinate in the X-Y coordinate system based on: (i) a force applied to each of a second plurality of the keys, and (ii) the first X coordinate and the first Y coordinate of each of the second plurality of the keys, and moving a visual indicator to a particular location on the display identified by the second X coordinate and the second Y coordinate. Also, a handheld electronic device (4) that implements the method, and a key assembly (62) that may utilized therein.

FIG.3

**Description**

## BACKGROUND OF THE INVENTION

Field of the Invention

The invention relates generally to handheld electronic devices and, more particularly, to a handheld electronic device having a keyboard that provides the ability to navigate on a display in two-dimensions. The invention also relates to an improved method of providing navigation in a handheld electronic device.

Description of the Related Art

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable and thus are relatively small.

Many handheld electronic devices include and provide access to a wide range of integrated applications, including, without limitation, email, telephone, short message service (SMS), multimedia messaging service (MMS), browser, calendar and address book applications, such that a user can easily manage information and communications from a single, integrated device. These applications are generally selectively accessible and executable through a user interface that allows a user to easily navigate among and within these applications. Typically, handheld electronic devices are provided with an input apparatus, which may include a keyboard and a rotational input device such as a thumbwheel, to enable the user to perform various functions through the user interface, including navigating among and within the device's applications.

As is known, many computing devices such as a personal computer or a laptop computer include an input apparatus, such as a mouse or a touchpad, which enables the user to navigate using a user interface in a two-dimensional manner. Such an input apparatus enables a user to, for example, selectively move a visual indicator, such as a cursor, a pointer, or the like, around a screen in two-dimensions. In contract, the input apparatuses of most current handheld electronic devices enable navigation in only a single dimension. In particular, a user may be able to use one or a combination of keys or a thumbwheel to move a visual indicator, such as a cursor, a pointer, or the like, up and down on a screen or left to right on a screen or to scroll through a number of items displayed on a screen in an up and down or left to right manner. Such input apparatuses do not, however, allow for two-dimensional navigation in the manner allowed by, for example, a mouse or touchpad.

Thus, there is a need for an input apparatus for a handheld electronic device that enables a user to navigate via a user interface in a two-dimensional manner. In addition, since handheld electronic devices typically are portable, it is desired that the form factor of the devices be sufficiently small and ergonomic so that they can conveniently be transported with a belt clip, in a user's pocket, manually, or in a briefcase. Thus, there is a need for an input apparatus for a handheld electronic device that enables two-dimensional navigation without adversely effecting the form factor of the device.

SUMMARY OF THE INVENTION

These and other advantages are provided by a method and device wherein two-dimensional navigation is enabled through use of the keys on the device's keyboard. Specifically, relative pressure applied to one or more keys is used to move a visual indicator, such as a pointer or cursor, around a display.

One aspect of the invention relates to a method of enabling navigation on a display of a handheld electronic device. The display has an X-Y coordinate system for identifying particular locations thereon. In addition, the handheld electronic device has a keyboard having a first plurality of keys, each of which has an assigned first X coordinate and an assigned first Y coordinate. The method includes determining a second X coordinate and a second Y coordinate in the X-Y coordinate system based on: (i) a force applied to each of a second plurality of the keys, and (ii) the first X coordinate and the first Y coordinate of each of the second plurality of the keys, and moving a visual indicator displayed on the display to a particular location on the display identified by the second X coordinate and the second Y coordinate. The determining and moving steps are repeated periodically to cause the visual indicator to move around the display as desired by the user.

The step of determining the second X coordinate may include calculating a weighted average of the first X coordinate of each of the second plurality of the keys using the force applied to each of the second plurality of the keys and the step of determining the second Y coordinate may include calculating a weighted average of the first Y coordinate of each of the second plurality of the keys using the force applied to each of the second plurality of the keys. In particular, the method may further include generating a voltage proportional to the force applied to each of the second plurality of the keys, wherein the weighted average of the first X coordinate of each of the second plurality of keys is calculated using the voltage proportional to the force applied to each of the second plurality of keys, and wherein the weighted average of the first Y coordinate of each of the second plurality of keys is calculated using the voltage proportional to the force applied to each of the second plurality of keys.

The invention, in another aspect, relates to a handheld electronic device that includes a display having an X-Y coordinate system for identifying locations thereon, a keyboard having a first plurality of keys, each of which has an assigned first X coordinate and an assigned first Y coordinate, a processor, and a memory in electronic communication with the processor. The memory stores one or more routines executable by the processor. The one or more routines are adapted to implement the various embodiments of the method described herein.

According to yet another aspect, the invention relates to key assembly for a handheld electronic device that enables two-dimensional navigation. The key assembly includes a key moveably mounted within a housing of the handheld electronic device, a collapsible dome mounted on a circuit board within the housing that, when fully collapsed, completes a circuit provided on the circuit board, and a transducing element located between the bottom portion of the key and a top surface of the collapsible dome. The transducing element converts a force applied thereto by the bottom portion of the key into a voltage proportional to force. The transducing element preferably comprises a piece of piezoelectric film. The key assembly may further include first and second conductors that are electrically connected to the transducing element and that are in electronic communication with a processor of the handheld electronic device. The transducing element may be located between the first and second conductors.

BRIEF DESCRIPTION OF THE DRAWINGS

A full understanding of the invention can be gained from the following

Description of the Preferred Embodiments when read in conjunction with the accompanying drawings in which:

Figure 1 is a front view of an improved handheld electronic device in accordance with the invention;
Figure 2 is a block diagram of the handheld electronic device of Figure 1; and
Figure 3 is a schematic diagram of a keyboard assembly in accordance with the invention forming part of the handheld electronic device of Figure 1;
Figure 4 is a schematic diagram of a key assembly in accordance with the invention forming part of the keyboard assembly of Figure 3; and
Figure 5 is a schematic diagram of a portion of an exemplary keyboard assembly as shown Figure 3 in accordance with the invention.

Similar numerals refer to similar parts throughout the specification.

DESCRIPTION OF THE PREFERRED EMBODIMENTS

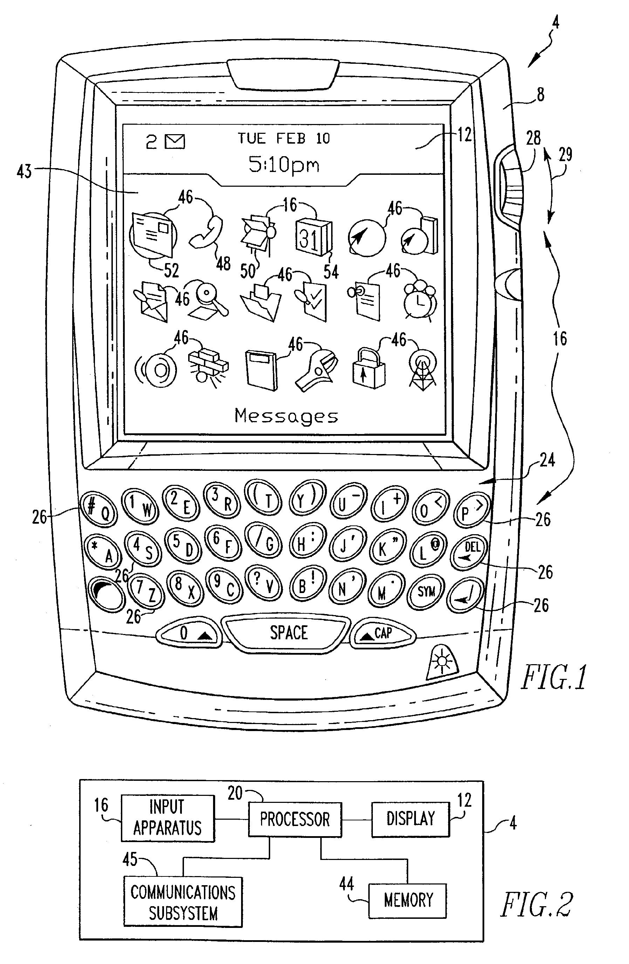

An improved handheld electronic device 4 in accordance with the invention is depicted generally in Figures 1 and 2. The handheld electronic device 4 includes a housing 8, a display 12, an input apparatus 16, and a processor 20 (Figure 2) which may be, without limitation, a microprocessor ($\mu$P). The processor 20 is responsive to inputs received from the input apparatus 16 and provides outputs to the display 12. Examples of handheld electronic devices are included in U.S. Patent Nos. 6,452,588 and 6,489,950, which are incorporated by reference herein.

As can be understood from Figure 1, the input apparatus 16 includes a keyboard 24 having a plurality of keys 26, and a rotatable thumbwheel 28. As used herein, the expression "key" and variations thereof shall refer broadly to any of a variety of input members such as buttons, switches, and the like without limitation. The keys 26 and the rotatable thumbwheel 28 are input members of the input apparatus 16, and each of the input members has a function assigned thereto. As used herein, the expression "function" and variations thereof can refer to any type of process, task, procedure, routine, subroutine, function call, or other type of software or firmware operation that can be performed by the processor 20 of the handheld electronic device 4.

As is shown in Figure 2, the processor 20 is in electronic communication with memory 44. Memory 44 can be any of a variety of types of internal and/or external storage media such as, without limitation, RAM, ROM, EPROM(s), EEPROM(s), and the like, alone or in combination, that provide a storage register for data storage such as in the fashion of an internal storage area of a computer, and can be volatile memory or nonvolatile memory. The memory 44 further includes a number of routines executable by processor 20 for the processing of data. The routines can be in any of a variety of forms such as, without limitation, software, firmware, and the like, and shall include one or more subroutines, processes, procedures, function calls or the like, alone or in combination.

As is also shown in Figure 2, processor 20 is in electronic communication with communications subsystem 45. Communications functions for handheld electronic device 4, including data and voice communications (wireless telephone), are performed through communications subsystem 45. Communications subsystem 45 includes a transmitter and a receiver (possibly combined in a single transceiver component), a SIM card, and one or more antennas. Other known components, such as a digital signal processor and a local oscillator, may also be part of communications subsystem 45. The specific design and implementation of communications subsystem 45 is dependent upon the communications network in which handheld electronic device 4 is intended to operate. For example, handheld electronic device 4 may include a communications subsystem 45 designed to operate with the Mobitex™, DataTAC™ or General Packet Radio Service (GPRS) mobile data communication networks and also designed to operate with any of a variety of voice communications networks, such as AMPS, TDMA, CDMA, PCS, GSM, and other suitable networks. Other types of data and voice networks, both separate and integrated, may also be utilized with handheld electronic device 4.

In Figure 1, the display 12 is depicted as displaying a home screen 43 that includes a number of applications depicted as discrete icons 46, including, without limitation, an icon representing a phone application 48, an address book application 50, a messaging application 52 which includes email, SMS and MMS applications, and a calendar application 54. In Figure 1, the home screen 43 is currently active and would constitute a portion of an application. Other applications, such as phone application 48, address book application 50, messaging application 52, and calendar application 54 can be initiated from the home screen 43 by providing an input through the input apparatus 16, such as by rotating the thumbwheel 28 and providing a selection input by translating the thumbwheel 28 in the direction indicated by the arrow 29 in Figure 1.

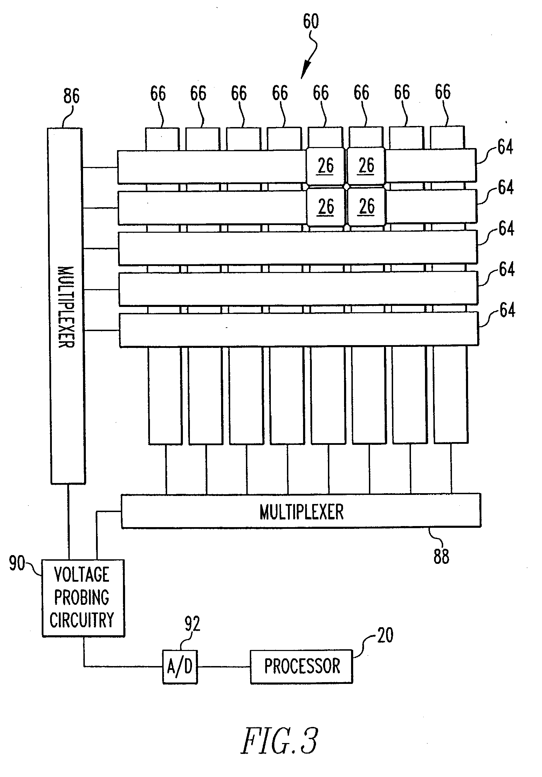

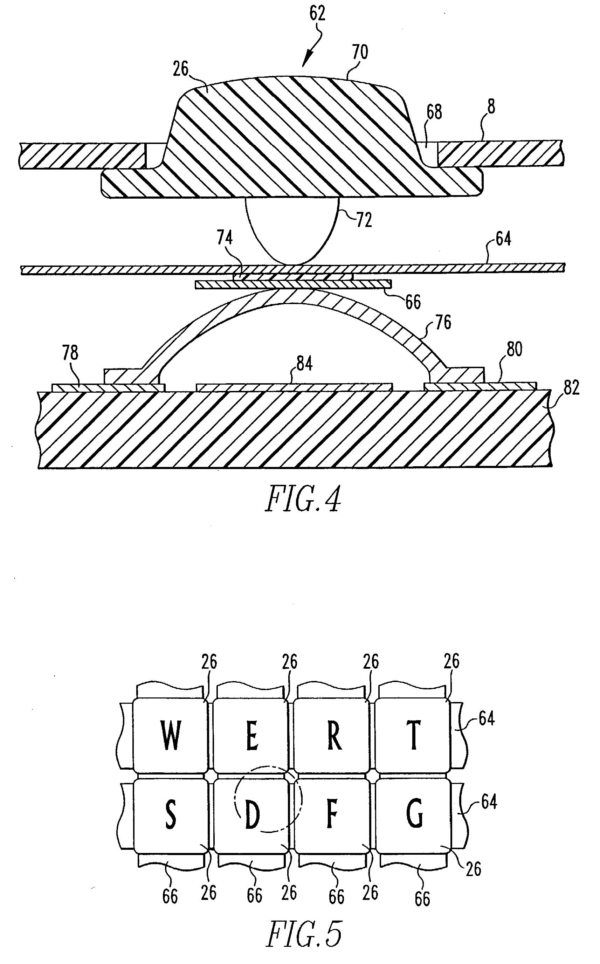

Figure 3 is a schematic diagram of a keyboard assembly 60 according the invention. Figure 4 is a schematic diagram of a key assembly 62 according to the invention. As described below, a number of key assemblies 62 are included within keyboard assembly 60. Keyboard assembly 60 includes a plurality of horizontal conductive strips 64 and a plurality of vertical conductive strips 66. As seen in Figure 3, horizontal conductive strips 64 and vertical conductive strips 66 are arranged in an overlapping fashion (preferably, although not necessarily, substantially perpendicular to one another) wherein horizontal conductive strips 64 overlap vertical conductive strips 66 (Figure 3) or vice versa. As such, horizontal conductive strips 64 and vertical conductive strips 66 form a matrix configuration. Horizontal conductive strips 64 and vertical conductive strips 66 each comprise a thin strip of conductive material such as a metal material like copper, conductive ink, a conductive polymer, or any type of conductive coating. A separate key assembly 62, described in greater detail below, is provided at each point of overlap between a horizontal conductive strip 64 and a vertical conductive strip 66 (for ease of illustration, only four key assemblies 62 are shown in Figure 3).

Referring to Figure 4, each key assembly 62 includes a respective key 26 partially disposed within housing 8 of handheld electronic device 4. In particular, each key 26 is inserted through a respective hole 68 provided in housing 8 such that a top portion 70 of each key 26 extends outwardly form housing 8 and a bottom protruding portion 72 of each key 26 is disposed within housing 8. As seen in Figure 4, protruding portion 72 of each key 26 is adjacent to a respective overlap point between a horizontal conductive strip 64 and a vertical conductive strip 66. In addition, piezoelectric film piece 74, having any of a number of different shapes (such as a square, rectangle or oval), is provided between the horizontal conductive strip 64 and the vertical conductive strip 66 at the point of overlap. As is known in the art, piezoelectric film is a flexible, lightweight plastic, such as, without limitation, polyvinylidene fluoride (PVDF) and its copolymers, PVC or nylon, that generates an electrical voltage that is proportional to a force that is applied to it. Thus, piezoelectric film piece 74 acts as a transducing element that converts mechanical energy (force) into electrical energy (voltage), and in particular converts the force applied thereto by protruding portion 72 (through horizontal conductive strip 64 and the vertical conductive strip 66) resulting from pressure applied to key 26 by a finger or thumb into a voltage that is proportional to the level of the force. Other types of transducing elements may also be used, such as, without limitation, various known strain gauges (e.g., a bonded metallic strain gauge) and the like. Each piezoelectric film piece 74 is electrically connected to a respective horizontal conductive strip 64 by a first wire or the like (not shown) and to a respective vertical conductive strip 66 by a second wire or the like (not shown) at the overlap point.

Each key assembly 62 further includes a metal or carbon coated collapsible dome 76 that is connected at each end to first and second electrical traces 78 and 80, respectively, provided on handheld electronic device PCB 82. In addition, a central portion of collapsible dome 76 is disposed over a third electrical trace 84 provided on handheld electronic device PCB 82. As will be appreciated, when sufficient force (more than a certain predetermined level) is applied to key 26, it causes collapsible dome 76 to collapse such that the central portion of collapsible dome 76 comes into contact with electrical trace 84, thereby completing the circuit that comprises electrical traces 78, 80 and 84. When the circuit that comprises electrical traces 78, 80 and 84 is so completed, a signal corresponding to the function of key 26 is sent to processor 20.

As will also be appreciated, various lower level forces may be applied to key 26, each of which will cause collapsible dome 76 to partially, rather than completely, collapse (this is often referred to as an intermediate press of key 26). In a partially collapsed condition, the central portion of collapsible dome 76 will not come into contact with electrical trace 84, and thus the circuit that comprises electrical traces 78, 80 and 84 will not be completed. The force that is applied to key 26 in such situations will, however, exert a force on piezoelectric film piece 74, thereby causing piezoelectric film piece 74 to generate a voltage in proportion to the level of the force.

Referring again to Figure 3, each horizontal conductive strip 64 is electrically connected to multiplexer 86. Similarly, each vertical conductive strip 64 is electrically connected to multiplexer 88. Each multiplexer 86, 88 is electrically connected to voltage probing circuitry 90. As is known in the art, such a configuration comprises a matrix switching system wherein a voltage level, if any, being generated by each piezoelectric film piece 74 (as a result of a force being applied to the corresponding key 26) may be separately and selectively measured using voltage probing circuitry 90. Voltage probing circuitry 90 is connected to analog-to-digital converter 92, which in turn is connected to processor 20 such that the measured voltage levels may be transmitted to processor 20 for processing as described herein.

In an alternate embodiment, the piezoelectric film piece 74 or similar transducer may be applied directly to the top surface of each collapsible dome 76 as, for example, a laminate layer. In this embodiment, electrical connections to the piezoelectric film piece 74 as described above may be made by connecting electrical conductors, such as the horizontal conductive strips 64 and the vertical conductive strips 66, to either side of the piezoelectric film piece 74.

According to the present invention, keyboard 24 including keyboard assembly 60 may be used to enable a user of handheld electronic device 4 to navigate on display 12 in a two-dimensional manner. In particular, keyboard 24 is treated as an X-Y coordinate system with the center-point of each key 26 on keyboard 24 being assigned an X and a Y coordinate. The X-Y coordinate system of keyboard 24 corresponds to a similar X-Y coordinate system on display 12, wherein each key 26 (the center-point) corresponds to a particular location on display 12 based on the particular X and Y coordinates of the key 26. Thus, in its simplest form, a visual indicator, such as a cursor, a pointer, or the like, may be selectively moved about display 12 based on the particular key 26 that is pressed (with a force that is less than that which is sufficient to completely collapse collapsible dome 76; forces sufficient to completely collapse collapsible dome 76 will not be used for navigation, but instead, as described above, are used to generate signals corresponding to the function of the pressed key 26). To provide much greater resolution and particularity to the positions on display 12 (beyond just those represented by the individual keys 26 and their assigned X and Y coordinates), additional, particular X and Y coordinates may be determined based on a calcualted center-point of pressure applied to one or more keys 26. In other words, according to the invention, it is possible to determine X and Y coordinates that lie in intermediate positions between the center-points of two or more keys 26, and such coordinates may by mapped to additional specific locations on display 12. To do so, the invention utilizes a weighted averaging method to determine the center-point position, and thus exact X and Y coordinates, at which pressure is applied to keys 26. Specifically, using multiplexers 86 and 88, processor 20 repeatedly scans keyboard assembly 60 to determine the voltage level being generated at each key assembly 62 (from piezoelectric film piece 74 or similar voltage transducer), and thus the pressures being exerted on each key 26. From that voltage information, processor 20 may calculate a weighted average X coordinate and a weighted average Y coordinate (which will represent a relative center-point of the exerted pressure) according to the following formulas:

$$X_{avg} = (X_1 * V_1 + X_2 * V_2 + X_3 * V_3 + \ldots X_n * V_n)/n$$

$$Y_{avg} = (Y_1 * V_1 + Y_2 * V_2 + Y_3 * V_3 + \ldots Y_n * V_n)/n$$

wherein a total of n keys 26 are being pressed at the time the measurement is made, $X_1 \ldots X_n$ and $Y_1 \ldots Y_n$ are the X and Y coordinates, respectively, assigned to the center-points of the pressed keys 26, and $V_1 \ldots V_n$ are the voltages generated at the key assembly 62 of each pressed key 26. For example, referring to Figure 5, which is a schematic of a portion of an exemplary keyboard assembly 60, if the "E", "D", and 'F" keys 26 are pressed (each one with a particular force less than the force sufficient to cause the collapse of the corresponding domes 76), the determined corresponding X and Y coordinates (weighted average) would be calculated as follows:

$$X_{avg} = (X_E * V_E + X_D * V_D + X_F * V_F)/3$$

$$Y_{avg} = (Y_E * V_E + Y_D * V_D + Y_F * V_F)/3$$

Thus, according to the invention, the weighted average X and Y coordinates may be continuously calculated and updated in real time as a user moves his or her finger or thumb across the keys 26 (applying pressure less than that which is sufficient to completely collapse collapsible dome 76), and a visual indicator, such as a cursor, a pointer, or the like, may be moved around display 12 in a two-dimensional manner to locations identified by the calculated weighted average X and Y coordinates.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

**Claims**

1. A method of enabling navigation on a display of a handheld electronic device, said display having an X-Y coordinate system for identifying locations thereon, said handheld electronic device having a keyboard having a first plurality of keys, each of said keys having an assigned first X coordinate and an assigned first Y coordinate, the method comprising:

   determining a second X coordinate and a second Y coordinate in said X-Y coordinate system based on a force applied to each of a second plurality of said keys and on the first X coordinate and the first Y coordinate of each of said second plurality of said keys; and
   moving a visual indicator displayed on said display to a particular location on said display identified by said second X coordinate and said second Y coordinate.

2. The method according to claim 1, wherein said step of determining said second X coordinate comprises calculating a weighted average of the first X coordinate of each of said second plurality of said keys using the force applied to each of said second plurality of said keys and said step of determining said second Y coordinate comprises calculating a weighted average of the first Y coordinate of each of said second plurality of said keys using the force applied to each of said second plurality of said keys.

3. The method according to claim 2, further comprising generating a voltage proportional to the force applied to each of said second plurality of said keys, wherein said weighted average of the first X coordinate of each of said second plurality of said keys is calculated using the voltage proportional to the force applied to each of said second plurality of said keys, and wherein said weighted average of the first Y coordinate of each of said second plurality of said keys is calculated using the voltage proportional to the force applied to each of said second plurality of said keys.

4. The method according to claim 1, further comprising periodically repeating said determining and moving steps.

5. A handheld electronic device, comprising:

   a display having an X-Y coordinate system for identifying locations thereon;
   a keyboard having a first plurality of keys, each of said keys having an assigned first X coordinate and an assigned first Y coordinate;
   a processor; and
   a memory in electronic communication with said processor, said memory storing one or more routines executable by said processor, said one or more routines being adapted to:

   determine a second X coordinate and a second Y coordinate in said X-Y coordinate system based on a force applied to each of a second plurality of said keys and on the first X coordinate and the first Y coordinate of each of said second plurality of said keys; and
   move a visual indicator displayed on said display to a particular location on said display identified by said second X coordinate and said second Y coordinate.

6. The handheld electronic device according to claim 5, said one or more routines being further adapted to determine said second X coordinate by calculating a weighted average of the first X coordinate of each of said second plurality of said keys using the force applied to each of said second plurality of said keys and to determine said second Y coordinate by calculating a weighted average of the first Y coordinate of each of said second plurality of said keys using the force applied to each of said second plurality of said keys.

7. The handheld electronic device according to claim 5, wherein each of said first plurality of keys has a corresponding transducing element that converts force applied to said transducing element into a proportional voltage, wherein the transducing element corresponding to each of said second plurality of said keys generates a voltage that is proportional to the force applied to the corresponding one of said second plurality of said keys, and wherein said one or more routines are further adapted to calculate said weighted average of the first X coordinate of each of said second plurality of said keys using the voltage that is proportional to the force applied to each of said second plurality of said keys and to calculate said weighted average of the first Y coordinate of each of said second plurality of said keys using the voltage that is proportional to the force applied to each of said second plurality of said keys.

8. The handheld electronic device according to claim 7, wherein each transducing element comprises a piece of piezoelectric film.

9. The handheld electronic device according to claim 8, further comprising a plurality of first conductive strips oriented in a first direction and a plurality of second conductive strips oriented in a second direction, said first direction intersecting said second direction to define a plurality of overlap locations, wherein in each of said overlap locations one of said first conductive strips and one of said second conductive strips overlap one another with the piece of piezoelectric film corresponding to one of said first plurality of keys being located therebetween.

10. The handheld electronic device according to claim 9, wherein the piece of piezoelectric film corresponding to each of said first plurality of keys is electrically connected to a corresponding one of said first conductive strips and a corresponding one of said second conductive strips.

11. The handheld electronic device according to claim 9, further comprising a first multiplexer and a second multiplexer, said first conductive strips being electrically connected to said first multiplexer and said second conductive strips being electrically connected to said second multiplexer., wherein said processor selectively receives a voltage signal indicating a voltage generated by the piece of piezoelectric film corresponding to each of said first plurality of keys using said first multiplexer and said second multiplexer.

12. The handheld electronic device according to claim 9, wherein said first conductive strips and said second conductive strips are substantially perpendicular to one another.

13. The handheld electronic device according to claim 5, wherein said routines are further adapted to determine said second X coordinate and said second Y coordinate and move said visual indicator in a periodically repeating manner.

14. A key assembly for a handheld electronic device, comprising:

a key moveably mounted within a housing of said handheld electronic device, said key having a top portion extending outwardly form said housing and a bottom portion disposed within said housing;
a collapsible dome mounted on a circuit board within said housing, said collapsible dome, when fully collapsed, completing a circuit provided on said circuit board; and
a transducing element located between said bottom portion of said key and a top surface of said collapsible dome, said transducing element converting a force applied thereto by said bottom portion of said key into a voltage proportional to said force.

15. The key assembly according to claim 14, wherein said transducing element comprises a piece of piezoelectric film.

16. The key assembly according to claim 14, further comprising first and second conductors, said transducing element being electrically connected to said first and second conductors, said first and second conductors being in electronic communication with a processor of said handheld electronic device.

17. The handheld electronic device according to claim 16, said transducing element being located between said first and second conductors.

**Amended claims in accordance with Rule 86(2) EPC.**

1. A method of enabling navigation on a display (12) of a handheld electronic device (4), said display (12) having an X-Y coordinate system for identifying locations thereon, said handheld electronic device (4) having a keyboard (24) having a first plurality of keys (26), each of said keys (26) having an assigned first X coordinate and an assigned first Y coordinate, the method comprising:

> determining a second X coordinate and a second Y coordinate in said X-Y coordinate system based on a force applied to each of a second plurality of said keys (26) and on the first X coordinate and the first Y coordinate of each of said second plurality of said keys (26); and
> moving a visual indicator displayed on said display (12) to a particular location on said display (12) identified by said second X coordinate and said second Y coordinate.

2. The method according to claim 1, wherein said step of determining said second X coordinate comprises calculating a weighted average of the first X coordinate of each of said second plurality of said keys (26) using the force applied to each of said second plurality of said keys (26) and said step of determining said second Y coordinate comprises calculating a weighted average of the first Y coordinate of each of said second plurality of said keys (26) using the force applied to each of said second plurality of said keys (26).

3. The method according to claim 2, further comprising generating a voltage proportional to the force applied to each of said second plurality of said keys (26), wherein said weighted average of the first X coordinate of each of said second plurality of said keys (26) is calculated using the voltage proportional to the force applied to each of said second plurality of said keys (26), and wherein said weighted average of the first Y coordinate of each of said second plurality of said keys (26) is calculated using the voltage proportional to the force applied to each of said second plurality of said keys (26).

4. The method according to claim 1, further comprising periodically repeating said determining and moving steps.

5. A handheld electronic device (4), comprising:

> a display (12) having an X-Y coordinate system for identifying locations thereon;
> a keyboard (24) having a first plurality of keys (26), each of said keys (26) having an assigned first X coordinate and an assigned first Y coordinate;
> a processor (20); and
> a memory (44) in electronic communication with said processor (20), said memory (44) storing one or more routines executable by said processor (20), said one or more routines being adapted to:

>> determine a second X coordinate and a second Y coordinate in said X-Y coordinate system based on a force applied to each of a second plurality of said keys (26) and on the first X coordinate and the first Y coordinate of each of said second plurality of said keys (26); and
>> move a visual indicator displayed on said display (12) to a particular location on said display (12) identified by said second X coordinate and said second Y coordinate.

6. The handheld electronic device (4) according to claim 5, said one or more routines being further adapted to determine said second X coordinate by calculating a weighted average of the first X coordinate of each of said second plurality of said keys (26) using the force applied to each of said second plurality of said keys (26) and to determine said second Y coordinate by calculating a weighted average of the first Y coordinate of each of said second plurality of said keys (26) using the force applied to each of said second plurality of said keys (26).

7. The handheld electronic device (4) according to claim 6, wherein each of said first plurality of keys (26) has a corresponding transducing element (74) that converts force applied to said transducing element (74) into a proportional voltage, wherein the transducing element (74) corresponding to each of said second plurality of said keys (26) generates a voltage that is proportional to the force applied to the corresponding one of said second plurality of said keys (26), and wherein said one or more routines are further adapted to calculate said weighted average of the first X coordinate of each of said second plurality of said keys (26) using the voltage that is proportional to the force applied to each of said second plurality of said keys (26) and to calculate said weighted average of the first Y coordinate of each of said second plurality of said keys (26) using the voltage that is proportional to the force applied to each of said second plurality of said keys (26).

**8.** The handheld electronic device (4) according to claim 7, wherein each transducing element (74) comprises a piece of piezoelectric film.

**9.** The handheld electronic device (4) according to claim 8, further comprising a plurality of first conductive strips (64) oriented in a first direction and a plurality of second conductive strips (66) oriented in a second direction, said first direction intersecting said second direction to define a plurality of overlap locations, wherein in each of said overlap locations one of said first conductive strips (64) and one of said second conductive strips (66) overlap one another with the piece of piezoelectric film (74) corresponding to one of said first plurality of keys (26) being located therebetween.

**10.** The handheld electronic device (4) according to claim 9, wherein the piece of piezoelectric film (74) corresponding to each of said first plurality of keys (26) is electrically connected to a corresponding one of said first conductive strips (64) and a corresponding one of said second conductive strips (66).

**11.** The handheld electronic device (4) according to claim 9, further comprising a first multiplexer (86) and a second multiplexer (88), said first conductive strips (64) being electrically connected to said first multiplexer (86) and said second conductive strips (66) being electrically connected to said second multiplexer (88), wherein said processor (20) selectively receives a voltage signal indicating a voltage generated by the piece of piezoelectric film (74) corresponding to each of said first plurality of keys (26) using said first multiplexer (86) and said second multiplexer (88).

**12.** The handheld electronic device (4) according to claim 9, wherein said first conductive strips (64) and said second conductive strips (66) are substantially perpendicular to one another.

**13.** The handheld electronic device (4) according to claim 5, wherein said routines are further adapted to determine said second X coordinate and said second Y coordinate and move said visual indicator in a periodically repeating manner.

TUE FEB 10
5:10pm

Messages

*FIG.1*

INPUT APPARATUS — PROCESSOR — DISPLAY

COMMUNICATIONS SUBSYSTEM

MEMORY

*FIG.2*

*FIG.3*

FIG.4

FIG.5

**European Patent Office**

## EUROPEAN SEARCH REPORT

Application Number

EP 05 25 0708

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 081 922 A (MATSUSHITA ELECTRIC INDUSTRIAL CO., LTD) 7 March 2001 (2001-03-07) * paragraphs [0013] - [0015] * * paragraphs [0017], [0018] * * paragraphs [0024] - [0043] * * paragraphs [0044] - [0047]; figures 1-9 * | 1-17 | G06F3/033 G06F1/16 G06F3/02 |
| X | EP 1 262 861 A (ALPS ELECTRIC CO., LTD) 4 December 2002 (2002-12-04) * paragraphs [0007] - [0012] * * paragraphs [0021] - [0038] * * paragraphs [0042] - [0055]; figures 1-7 * | 1-17 | |
| A | US 6 492 979 B1 (KENT JOEL ET AL) 10 December 2002 (2002-12-10) * column 7, lines 25-52; figure 7 * | 1-3,5-7, 14 | |
| A | GB 2 196 164 A (* DE LA RUE SYSTEMS LIMITED) 20 April 1988 (1988-04-20) * page 1, left-hand column, line 28 - page 2, left-hand column, line 18 * * page 2, left-hand column, line 65 - page 3, right-hand column, line 76 * | 1,5-12, 14-17 | TECHNICAL FIELDS SEARCHED (Int.Cl.7) G06F |
| A | GB 2 321 707 A (JOHN KARL * ATKINSON; ANDREW WILLIAM JAMES * CRANNY; RUSSELL PAUL * SI) 5 August 1998 (1998-08-05) * page 3, line 1 - page 4, line 12; figures 1,2 * | 2,3,6,7 | |
| A | EP 0 256 799 A (MICROELECT APPLIC RES INST; THE MICROELECTRONICS APPLICATIONS RESEARCH) 24 February 1988 (1988-02-24) * the whole document * | 1,5-12, 14-17 | |

-/--

The present search report has been drawn up for all claims

| Place of search | Date of completion of the search | Examiner |
|---|---|---|
| Berlin | 3 June 2005 | Mouton, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 25 0708

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 332 365 A (MOTT, JONATHAN CHRISTOPHER) 13 September 1989 (1989-09-13) * the whole document * ----- | 1,5-12, 14-17 | |

TECHNICAL FIELDS
SEARCHED (Int.Cl.7)

The present search report has been drawn up for all claims

| Place of search | Date of completion of the search | Examiner |
|---|---|---|
| Berlin | 3 June 2005 | Mouton, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 0708

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2005

| Patent document cited in search report | | Publication date | Patent family member(s) | | Publication date |
|---|---|---|---|---|---|
| EP 1081922 | A | 07-03-2001 | JP<br>EP<br>US | 2001076582 A<br>1081922 A2<br>6518958 B1 | 23-03-2001<br>07-03-2001<br>11-02-2003 |
| EP 1262861 | A | 04-12-2002 | JP<br>EP<br>US | 2002351606 A<br>1262861 A1<br>2002180707 A1 | 06-12-2002<br>04-12-2002<br>05-12-2002 |
| US 6492979 | B1 | 10-12-2002 | NONE | | |
| GB 2196164 | A | 20-04-1988 | NONE | | |
| GB 2321707 | A | 05-08-1998 | NONE | | |
| EP 0256799 | A | 24-02-1988 | EP<br>GB<br>US | 0256799 A2<br>2194057 A ,B<br>4866412 A | 24-02-1988<br>24-02-1988<br>12-09-1989 |
| EP 0332365 | A | 13-09-1989 | CH<br>EP<br>JP<br>US | 674588 A5<br>0332365 A1<br>2103677 A<br>5013874 A | 15-06-1990<br>13-09-1989<br>16-04-1990<br>07-05-1991 |

EPO FORM P0459

For more details about this annex : see Official Journal of the European Patent Office, No. 12/82